(19)

Europäisches
Patentamt
European
Patent Office
Office européen
des brevets

(11) **EP 4 276 612 A1**

(12) **EUROPEAN PATENT APPLICATION**

(43) Date of publication:
**15.11.2023 Bulletin 2023/46**

(21) Application number: **22305721.7**

(22) Date of filing: **13.05.2022**

(51) International Patent Classification (IPC):
**G06F 9/44** *(2018.01)* **G06F 11/36** *(2006.01)*

(52) Cooperative Patent Classification (CPC):
**G06F 9/44; G06F 11/3608;** G06F 11/36

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Mitsubishi Electric R&D Centre Europe B.V.
1119 NS Schiphol Rijk Amsterdam (NL)**
Designated Contracting States:
**FR**
• **MITSUBISHI ELECTRIC CORPORATION
Chiyoda-ku
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventors:
• **FAISSOLE, Florian
35708 RENNES CÉDEX 7 (FR)**
• **BOYER, Benoit
35708 RENNES CÉDEX 7 (FR)**
• **NOGUCHI, Reiya
35708 RENNES CÉDEX 7 (FR)**

(74) Representative: **Plasseraud IP
66, rue de la Chaussée d'Antin
75440 Paris Cedex 09 (FR)**

(54) **METHOD AND SYSTEM FOR PROVING AN ABSENCE OF DIFFERENCE IN THE RESPECTIVE BEHAVIORS OF A FIRST DATAFLOW PROGRAM AND A SECOND DATAFLOW PROGRAM**

(57) The present disclosure relates to a computer implemented method (20) for proving an absence of difference in the respective behaviors of a first dataflow program and a second dataflow program, the first dataflow program and the second dataflow program having a same set of input variables, a same set of output variables and respective sets of internal variables, comprising:
- (S20) parsing the first dataflow program and the second dataflow program to produce respectively a first mathematical representation and a second mathematical representation,
- (S21) receiving an induction relation linking the values of the set of internal variables of the first dataflow program with the values of the set of internal variables of the second dataflow program,
- (S22) setting an initial sequent defining that the values of the set of output variables of the first and second dataflow program are identical
- iteratively (S23) applying a predetermined set of deduction rules to the initial sequent until irreducible sequents are obtained, wherein the set of deduction rules comprises an induction deduction rule which applies the induction relation as hypothesis,

- (S24) applying a decision procedure to each irreducible sequent.

Fig. 2

EP 4 276 612 A1

**Description**

**TECHNICAL FIELD**

The present disclosure relates to computer program development and relates more specifically to a method and system for proving an absence of difference in the respective behaviors of a first dataflow program and a second dataflow program.

**BACKGROUND ART**

The whole life of a software requires source code upgrade: first during its development, but also after its deployment to fix bugs, provide new features or more important evolutions.

When upgrading a software's source code, one needs to ensure that the source code modifications do not impact more the behavior of the software than what is expected. Usually, this is verified by regression testing, by replaying all functional and non-functional tests previously written and successfully passed on the previous version of the software. Regression testing helps discovering some source code upgrades which may alter the desired behavior of the software.

However, if regression testing gives a first hint to the developer, it may be difficult for the developer to detect efficiently the actual impact of the source code upgrade on the whole software.

Change impact analysis intends to solve that issue to identify which part of the software may have a different behavior after modification during source code upgrade. This provides two main benefits: (1) it helps developers to better understand the actual impact of the change on the software, meaning that they can better anticipate some possible bugs and (2) it may speed-up development since replaying regression tests may consume a large amount of time.

In the field of change impact analysis, dependency-based methods identify changes by comparing elements at the same granularity level, e.g. at the design level or at the source code level, by analyzing their syntax. We focus herein on source code level dependency-based approaches, that detect or analyze changes on the real final source code program.

For instance, one approach is based on difference semantics, which provides a formal semantics for difference between two source code programs, allowing the user to reason on its properties.

For instance, [LAHIRI2012] proposes to reason on two programs written in the Boogie intermediate language, which has front-ends for various languages like C or Java. The principle of their approach is to use satisfiability modulo theories, SMT, solvers like Z3 to modularly prove the equivalence between the two programs. This approach applies to traditional programming languages such as C or Java and is not adequate for e.g. dataflow programming languages, especially for memory blocks.

Dataflow programming languages correspond to a programming paradigm in which programs are seen as series of connections and boxes corresponding to data movements and transformations. In contrast with programs written in traditional programming languages such as C or Java, dataflow programs are parallel by construction, making them particularly adequate to model physical systems or hardware, mainly for embedded applications. Graphical programming environments offer a natural framework to implement dataflow programs. Among them, we can cite SCADE®, a dataflow programming language with a formal semantics, based on the Lustre synchronous language, and Simulink®, a Matlab® graphical dataflow programming environment to model and simulate dynamical systems.

As in any conventional programming languages, it is important to distinguish syntactic and semantics changes. As soon as two programs differ in their implementations, there is a syntactic change between them. It does not necessarily mean that they have different behaviors. We say that there is a semantic change between two programs when they differ on their behavior, i.e. when on the same input values, they differ on their output values. In the present disclosure, the goal is therefore to verify whether two syntactically different dataflow programs differ in their respective behaviors (i.e. whether they are semantically different).

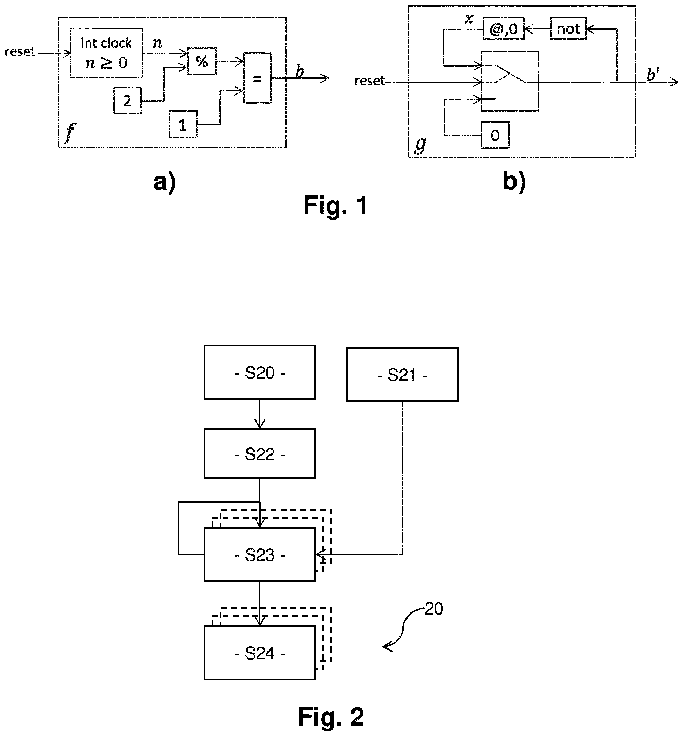

Figure 1 represents schematically two Simulink® dataflow programs (models) which are syntactically different but semantically equivalent. More specifically, part a) of figure 1 represents a first dataflow program implementing a function $f$, and part b) of figure 1 represents a second dataflow program implementing a function $g$, wherein both functions $f$ and $g$ model a Boolean clock with a period $T = 2$.

The prior art solutions are not able to automatically detect semantic differences between dataflow programs such as represented in figure 1. In particular, source code level dependency-based approaches are dedicated to traditional languages like C or Java.

**SUMMARY**

The present disclosure aims at improving the situation. In particular, the present disclosure aims at overcoming at least some of the limitations of the prior art discussed above, by proposing a solution enabling automatically and formally proving the absence of semantic (behavior) differences between syntactically different dataflow programs.

For this purpose, and according to a first aspect, the present disclosure relates to a computer implemented method for proving an absence of difference in the respective behaviors of a first dataflow program and a second dataflow program, the first dataflow program and the second dataflow program having a same set of input variables, a same set of output variables and respective sets of internal variables, the first dataflow program and the second dataflow program having an initialization phase and an execution phase relative to execution steps after the initialization phase, wherein the internal variables correspond to variables for which the values are memorized from one execution step to another, said method comprising:

- parsing the first dataflow program and the second dataflow program to produce respectively a first mathematical representation and a second mathematical representation,
- receiving an induction relation linking the values of the set of internal variables of the first dataflow program with the values of the set of internal variables of the second dataflow program,
- setting an initial sequent based on the first mathematical representation and the second mathematical representation, said initial sequent defining that the values of the set of output variables of the first and second dataflow program are identical,
- iteratively applying a predetermined set of deduction rules to the initial sequent until irreducible sequents are obtained, each deduction rule converting a sequent into at least one other sequent, wherein the set of deduction rules comprises an induction deduction rule which is applied and converts a sequent into a first sequent relative to the initialization phase, referred to as initialization root sequent, and a sequent relative to the execution phase, referred to as execution root sequent, which includes as hypothesis the induction relation and the fact that the values of the set of output variables of the first and second dataflow program are identical at the previous execution step,
- applying a decision procedure to each irreducible sequent.

Basically, the first dataflow program and the second dataflow program (wherein the second dataflow program may for instance be an upgrade of the first dataflow program) have the same behavior if they provide at each execution step the same output variables' values when subjected to the same input variables' values. Hence for a same sequence of input variables' values, the first dataflow program and the second dataflow program should provide the same sequence of output variables' values. In other words, the first and second dataflow programs should yield the same execution traces, wherein an execution trace corresponds to a sequence of the successive states of the variables of the dataflow programs, associated to the successive execution steps.

However, such execution traces are typically infinite, such that it is not possible to formally prove an absence of difference between the respective behaviors of the first and second dataflow programs by directly comparing all possible execution traces produced by the first and second dataflow programs.

A dataflow program typically comprises internal variables which are persistent, i.e. for which the values are memorized from one execution step to another. Hence, during an execution step, the behavior of the dataflow program depends on the values of these internal variables at the end of the previous execution step, and these values may be updated during the current execution step (and memorized for the next execution step, etc.). Such internal variables may also be referred to as memory blocks in the sequel. In the present disclosure, it is therefore assumed that there exists an induction relation $\mathcal{R}$ which links the values of the set of internal variables of the first dataflow program with the values of the set of internal variables of the second dataflow program, and that this induction relation $\mathcal{R}$ holds from one execution step to another. This induction relation $\mathcal{R}$ is not proved and is received as an input of the method. For instance, the induction relation $\mathcal{R}$ may be established by a developer. Hence, the induction relation $\mathcal{R}$ can be used to synchronize the values of the internal variables of the first and second dataflow programs, such as to be able to consider virtually any execution step of any execution trace without having to fully execute a whole execution trace.

Based on this induction relation $\mathcal{R}$, the proposed method then tries proving formally the absence of behavior difference by induction. The proposed method therefore distinguishes an initialization phase, during which the values of the internal variables are typically initialized, and an execution phase, during which the induction relation $\mathcal{R}$ enables to synchronize the values of the internal variables of the first and second dataflow programs.

The proposed method proves the absence of behavior difference by using sequent calculation. An initial sequent is defined by using a first mathematical representation and a second mathematical representation, which represent the mathematical computations/equations performed by respectively the first dataflow program and the second dataflow program. This initial sequent basically states that the values of the set of output variables of the first and second dataflow programs are identical, by using the first and second mathematical representations. Then, predetermined deduction rules are applied iteratively until irreducible sequents are obtained (i.e. on which no further deduction rule can be applied).

In particular, an induction deduction rule is applied once to produce an initialization root sequent (relative to the initialization phase) and an execution root sequent (relative to the execution phase, which assumes as hypothesis the induction relation $\mathcal{R}$ ). Accordingly, some of the irreducible sequents will be based on the initialization root sequent and some of the irreducible sequents will be based on the execution root sequent. The absence of behavior difference is evaluated by applying an automatic decision procedure to the irreducible sequents, by trying to prove *inter alia* the absence of behavior difference for the initialization phase (sequents based on the initialization root sequent) and for the execution phase (sequents based on the execution root sequent).

If all irreducible sequents are considered satisfiable, then the absence of behavior difference is proved. In turn, if one of the irreducible sequents is not satisfiable, then the absence of behavior difference is not proved and the first and second dataflow programs are considered to exhibit semantic differences.

In specific embodiments, the proving method can further comprise one or more of the following optional features, considered either alone or in any technically possible combination.

In specific embodiments, the set of deduction rules comprises at least one initialization-specific deduction rule, which is applicable only on the initialization root sequent or on a sequent deduced from the initialization root sequent, and at least one execution-specific deduction rule, which is applicable only on the execution root sequent or on a sequent deduced from the execution root sequent.

In specific embodiments, the first dataflow program and the second dataflow program are in a textual programming language.

In specific embodiments, the first dataflow program and the second dataflow program are in a visual programming language and are converted into a textual programming language before parsing.

In specific embodiments, the absence of difference in the behaviors of the first and second dataflow programs is proved when each irreducible sequent is proved to be satisfiable by a decision procedure.

In specific embodiments, when an irreducible sequent cannot be proved to be satisfiable by a decision procedure, said decision procedure returns a witness state of the non-satisfiability of said irreducible sequent, said witness state including values of the set of input variables and values of the respective sets of internal variables of the first and second dataflow programs, which satisfy the induction relation, for which the values of the set of output variables are not identical for the first and second dataflow program.

In specific embodiments, each decision procedure is an automatic theorem prover, for instance a satisfiability modulo theories, SMT, solver.

According to a second aspect, the present disclosure relates to a computer program product comprising instructions which, when executed by at least one processor, configure said at least one processor to carry out a method according to any one of the embodiments of the present disclosure.

According to a third aspect, the present disclosure relates to a computer-readable storage medium comprising instructions which, when executed by at least one processor, configure said at least one processor to carry out a method according to any one of the embodiments of the present disclosure.

According to a fourth aspect, the present disclosure relates to a system for proving an absence of difference in the respective behaviors of a first dataflow program and a second dataflow program, the first dataflow program and the second dataflow program having a same set of input variables, a same set of output variables and respective sets of internal variables, the first dataflow program and the second dataflow program having an initialization phase and an execution phase relative to execution steps after the initialization phase, wherein the internal variables correspond to variables for which the values are memorized from one execution step to another, said system comprising at least one processor and at least one memory, wherein the at least one processor is configured to carry out a method according to any one of the embodiments of the present disclosure.

Hence, the present disclosure addresses the automatic and formal verification of semantic changes absence between syntactically different dataflow programs. Thanks to the proposed solution, there is no need of maintaining a database of non-regression tests to get a good coverage, while exhaustiveness of the proposed solution is guaranteed. The proposed solution is fully automatic, and the user does not need to provide the verification system with an ad hoc definition of absence of change for the considered dataflow programs. Instead, we propose a definition of absence of semantic change sufficiently generic to handle any dataflow program.

## BRIEF DESCRIPTION OF DRAWINGS

The invention will be better understood upon reading the following description, given as an example that is in no way limiting, and made in reference to the figures which show:

- Figure 1; schematical representations of examples of two syntactically different dataflow programs which are semantically identical,

- Figure 2: a diagram representing the main steps of an exemplary embodiment of a method for proving an absence of difference in the behaviors of two dataflow programs,
- Figure 3: an example of generic syntax of a dataflow textual programming language,
- Figure 4: an example of semantic rules for expressions,
- Figure 5: an example of semantic rules for equations,
- Figure 6: an example of deduction rules for the analysis of the absence of difference between the behaviors of dataflow programs,
- Figure 7: an example of a general structure of a proof tree obtained when applying the deduction rules,
- Figure 8: an example of proof tree obtained when applying the deduction rules to the dataflow programs in figure 1.

In these figures, references identical from one figure to another designate identical or analogous elements. For reasons of clarity, the elements shown are not to scale, unless explicitly stated otherwise.

Also, the order of steps represented in these figures is provided only for illustration purposes and is not meant to limit the present disclosure which may be applied with the same steps executed in a different order.

## DESCRIPTION OF EMBODIMENTS

Figure 2 represents schematically the main steps of a method 20 for proving an absence of difference in the respective behaviors of a first dataflow program and a second dataflow program.

The proving method 20 is carried out by a computer system (not represented in the figures). In preferred embodiments, the computer system comprises one or more processors (which may belong to a same computer or to different computers) and one or more memories (which may belong to a same computer or to different computers). The one or more processors may include for instance a central processing unit (CPU), a digital signal processor (DSP), a field-programmable gate array (FPGA), an application specific integrated circuit (ASIC), etc. The one or more memories may include any type of computer readable volatile and non-volatile memories (magnetic hard disk, solid-state disk, optical disk, electronic memory, etc.). The one or more memories may store a computer program product, in the form of a set of program-code instructions to be executed by the one or more processors in order to implement all or part of the steps of the proving method 20. In other words, the computer system comprises a set of means configured by software (specific computer program product) and/or by hardware (CPU, FPGA, ASIC, etc.) to implement the steps of the proving method 20.

In the present disclosure, we want to compare the behaviors of a first dataflow program and a second dataflow program. These first and second dataflow programs have a same set of input variables, a same set of output variables (strictly identical or identical up to a bijective application) and respective sets of internal variables. These first and second dataflow programs conventionally have an initialization phase and an execution phase which is relative to execution steps after the initialization phase. Also, the internal variables correspond to variables for which the values are memorized and used from one execution step to another (i.e. memory blocks).

The present disclosure applies to dataflow programs in source code. The present disclosure is not limited to a specific dataflow programming language and can be applied to any dataflow programming language, including any type of visual (graphical) or textual dataflow programming language.

In preferred embodiments, the first and second dataflow programs to be compared are provided in a textual programming language. If the first and second dataflow programs are initially in a visual programming language, the proving method 20 may comprise a prior step of converting the first and second dataflow programs into a textual programming language. In the sequel, we consider in a non-limitative manner that the first and second dataflow programs are in textual programming language.

In the present disclosure, we consider a generic textual programming language for which we provide hereinbelow the considered generic syntax, that will serve as basis for the analysis of the behavior difference of the dataflow programs. Hence, we consider in a non-limitative manner that the first and second dataflow programs are provided using the generic syntax of the proposed generic textual programming language. However, the present disclosure can be applied to any textual programming language grammar. In particular, existing dataflow programming environments such as SCADE® or Matlab Simulink®, despite using a graphical dataflow programming environment, are configured to provide the dataflow programs in textual programming language, using respective syntaxes. The present disclosure can be applied using any of these syntaxes, either directly or indirectly by converting beforehand said syntaxes into the generic syntax considered herein in a non-limitative manner.

Generic syntax of the textual dataflow programming language

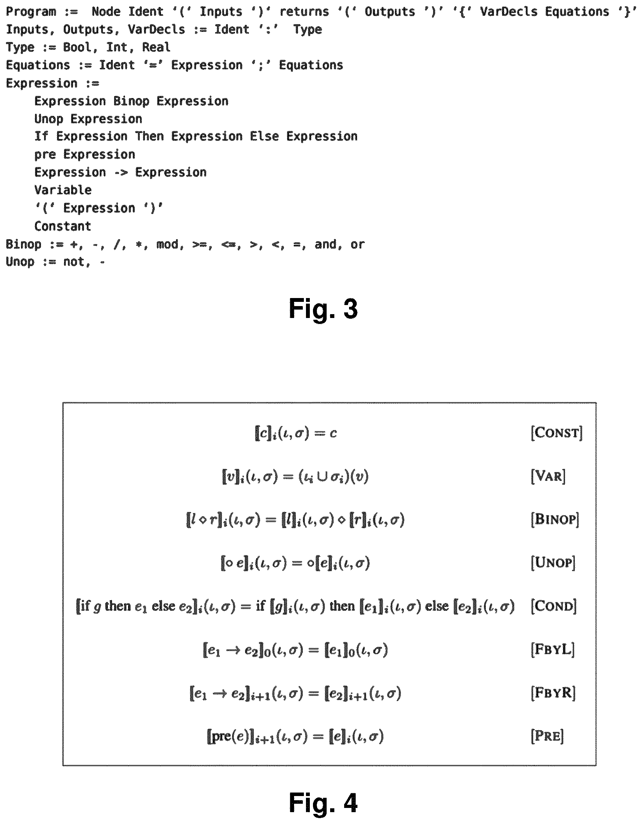

Textual dataflow programs are made of equational descriptions and may be based on the generic syntax represented in figure 3. Any dataflow program may be expressed using this generic syntax.

Dataflow programs are made of sets of identifiers (for input, internal and output variables) and of sets of equations that correspond to relations between expressions (themselves built from the variables) that must be satisfied by the system at any time. Among expressions, two constructions are rather unusual to traditional (non-dataflow) programming languages: "followed-by" (Expression -> Expression) and "pre" (pre Expression) that are used to describe memory blocks (used to store values of internal variables from one execution step to another). The "pre" constructor describes a temporal delay while the "followed-by" arrow serves an initialization phase. For instance, if we consider $z = 0 \rightarrow \text{pre } x$, then this means that the value of $z$ is equal to 0 at initialization and then, for each subsequent iteration, it takes the value $x$ at the previous iteration. Table 1 below describes the evolution of $z$ according to the evolution of $x$:

Table 1

| Time | $t_1$ | $t_2$ | t3 | t4 | ⋯ |
|------|-------|-------|----|----|---|
| **x** | 1 | 4 | 2 | 3 | ⋯ |
| **z** | 0 | 1 | 4 | 2 | ⋯ |

The generic syntax represented in figure 3 (or any dataflow programming language syntax) is richer than what is actually required to describe and to conduct the absence of behavior difference analysis.

Accordingly, in some embodiments, and as illustrated by figure 2, the proving method 20 comprises a step S20 of parsing the first and second dataflow programs. Such a parsing step S20 is conventionally implemented in compilation methods and aims herein at producing a mathematical representation for each of the first and second dataflow programs. Hence, the parsing step S20 produces inter alia a first mathematical representation for the first dataflow program and a second mathematical representation for the second dataflow program. These first and second mathematical representations represent the mathematical computations/equations performed by respectively the first dataflow program and the second dataflow program on the input and internal variables to produce the output variables.

For instance, the parsing step S20 may use an abstract syntax to produce the first and second mathematical representations. We provide hereinbelow an example of abstract syntax that may be used during the parsing step S20. However, the present disclosure is not limited to a specific type of abstract syntax and the choice of a specific abstract syntax corresponds to a specific embodiment of the present disclosure.

Abstract syntax

The non-limitative abstract syntax proposed herein is made of two layers: expressions and equations sets.

We denote by $\mathcal{I}$, $\mathcal{O}$ and $\mathcal{L}$ the sets of input, output and internal variables identifiers, respectively. We assume that $\mathcal{I}$ and $\mathcal{O}$ are disjoint, and that $\mathcal{I}$ and $\mathcal{L}$ are disjoint. $\mathcal{O}$ and $\mathcal{L}$ are not necessarily disjoint. The set of internal variables $\mathcal{L}$ includes the variables which are stored in memory blocks. We note $\mathcal{D}_\perp$ the domains on which the variables can be valuated, and more precisely $\mathcal{D}_\perp = \mathcal{D} \cup \perp$ where D is any usual domain of programming languages (e.g., bool, int, float, etc.) and $\perp$ corresponds to the unknown valuation. We define the type of expressions of a dataflow program as indicated in the following definition.

Definition 1 (Abstract Syntax):

Assuming that $v \in \mathcal{I} \uplus (\mathcal{O} \cup \mathcal{L})$, we define any equation $e$ as:

$$e := c \mid v \mid e \diamond e \mid \circ e \mid \text{if } e \text{ then } e \text{ else } e \mid e \rightarrow e \mid \text{pre } e$$

wherein:

- $c \in \mathcal{D}$ is a constant,
- $\circ \in \{\text{not, -}\}$,
- $\diamond \in \{+, -, \times, /, \text{mod}, \leq, <, =, >, \geq, \text{and, or}\}$.

Then, we define the sequence of equations of a dataflow program as $\varepsilon := (v = e)^N$ such that a dataflow program is finally defined as a tuple:

$$\mathcal{P} = \langle \mathcal{I}, \mathcal{O}, \mathcal{L}, \mathcal{E} \rangle$$

Note that, we use the usual functional programming list notation to define such sequences of equations, i.e., $\varepsilon$ is the empty sequence and $(v = e) :: \varepsilon$ is the concatenation of the equation $v = e$ to the sequence of equations $\varepsilon$.

Semantics for behavior difference analysis

Now, let us describe our behavior difference analysis semantics. The semantics of a dataflow program is based on the construction of an execution trace whose elements are valuations over its variables. We build execution traces of a dataflow program $\mathcal{P}$ by iterating (execution steps) the evaluation of the equations set $\varepsilon$. The obtained execution trace is an infinite state sequence defined by the function $\sigma : \mathbb{N} \to \mathcal{O} \cup \mathcal{L} \to \mathcal{D}_\perp$ that corresponds to the valuation of output and internal variables through the execution. The notation $\sigma_i$ corresponds to the $i$th state of the sequence, i.e., the valuation $\sigma(i) : \mathcal{O} \cup \mathcal{L} \to \mathcal{D}_\perp$. Additionally, undefined states are noted $\sigma_\perp$ which is the undefined valuation such that $\forall v \in \mathcal{O} \cup \mathcal{L}$, $\sigma_\perp(v) = \perp$. A finite execution trace of length $n + 1$, is the infinite sequence of states starting by $\sigma_0 ... \sigma_n$ and followed by $\sigma_\perp \sigma_\perp \cdots$. Intuitively, after executing $n$ execution steps of the program, the only built states are states from 0 to $n$. The tail of the execution trace is undefined. The valuation on the input variables is the function $\iota : \mathbb{N} \to \mathcal{I} \to \mathcal{D}_\perp$ giving the value of an input variable at a given execution step, it corresponds to the values of the input variables through the execution trace of the dataflow program. For an ordered sequence of equations $\varepsilon$ (see more details about equations ordering hereinafter), states $\sigma_i$ are incrementally obtained from the input values $\iota_i$ and the previous state $\sigma_{i-1}$ (if any) by evaluating each equation and updating the new state accordingly. Initially, the evaluation of the state is undefined for any index, i.e., $\forall i \, \sigma_i = \sigma_\perp$. This execution trace is denoted $\omega$.

To define the semantics (behavior) of a dataflow program, we provide semantics rules for expressions. Their objective is to provide a new valuation for variables involved in expressions from a current valuation (execution step) and the valuation over input variables. Valuations have the shape $[e]_i(I, \sigma)$ where e is an expression of the dataflow programming language (see Definition 1). An example of semantics rules for expressions is provided in figure 4.

Then, we define the semantics of equations sets of dataflow programs. For that purpose, we first need to sequence equations according to their dependency order. Following the dependency order ensures that any equation can be evaluated as soon as all its dependencies have been evaluated. For instance, the dataflow equation $x := y + 4$ can be evaluated only if the value of $y$ is known, i.e., the equation $y := ...$ has been evaluated first.

According to this, we use a dependency relation $\prec$ such that for a variable $y$ on which $x$ depends, we have $y \prec x$. Intuitively, it means that we need the valuation of $y$ to be able to evaluate x. In the following, we assume that the set $\varepsilon$ of equations is ordered as a sequence $(x_i = e_i)_{i \in \mathbb{N}}$ such that $\forall i, x_i \prec x_{i+1}$.

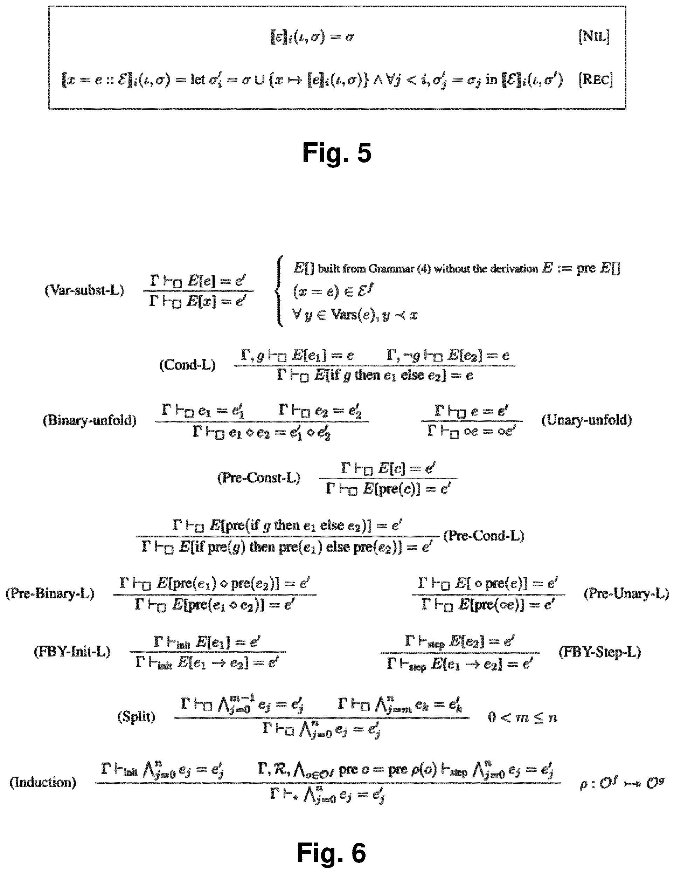

Assuming that $\sigma$ is an execution trace of length $n$, i.e., obtained after $n$ executions for the ordered set of equations $\varepsilon$ over the input sequence $I$, the execution trace of length $n + 1$ is inductively defined as $[\![\mathcal{E}]\!]_n(\iota, \sigma)$. The evaluation of consecutive equations is defined in figure 5.

Definition 2 (Dataflow program semantics):

Let $\mathcal{P} = \langle \mathcal{O}, \mathcal{O}, \mathcal{L}, \varepsilon \rangle$ be a dataflow program. Assuming the input valuation $\iota : \mathbb{N} \to \mathcal{I} \to \mathcal{D}_\perp$, the execution trace $\sigma^{\mathcal{P}}$ built by executing $\mathcal{P}$ against $\iota$ is defined as the sequence of states $\left( \sigma_i^{\mathcal{P}} \right)_{i \in \mathbb{N}}$ such that

$$\sigma_i^{\mathcal{P}} = [\![\mathcal{E}]\!]_i(\iota, \omega)$$

for all $i$.

Definition 3 (Internal state semantics of dataflow program):

Let $\mathcal{P} = \langle \mathcal{I}, \mathcal{O}, \mathcal{L}, \varepsilon \rangle$ be a dataflow program. Assuming the input valuation

$$\iota : \mathbb{N} \to \mathcal{I} \to \mathcal{D}_{\perp},$$

the execution trace of states

$$\mu^{\mathcal{P}}$$

is the restriction of

$$\sigma^{\mathcal{P}}$$

to the internal variables $\mathcal{L}$ which is defined as $\forall i \in \mathbb{N}, \forall x \in \mathcal{L}$,

$$\mu_i^{\mathcal{P}}(x) = \sigma_i^{\mathcal{P}}(x).$$

Based on the above definitions and conventions, we now detail how the proving method 20 verifies the absence of difference between the respective behaviors of the first and second dataflow program.

Definition 4:

Let us denote by $f$ and $g$ the first and second dataflow programs sharing the same set of inputs $\mathcal{I}$. Let us assume that there exists a bijective application

$$\rho : \mathcal{O}^f \rightarrowtail\mathrel{\mkern-14mu}\rightarrow \mathcal{O}^g$$

between respective output variables sets

$$\mathcal{O}^f$$

and

$$\mathcal{O}^g$$

of $f$ and $g$. It should be noted that, in the present disclosure, $f$ and $g$ are said to have the same set of output variables identifiers, which is to be understood as either

$$\mathcal{O}^f$$

being strictly identical to

$$\mathcal{O}^g$$

, or

$$\mathcal{O}^f$$

being identical to

$$\mathcal{O}^g$$

up to a bijective application

$$\rho : \mathcal{O}^f \twoheadrightarrow \mathcal{O}^g.$$

We say that said dataflow programs $f$ and $g$ are semantically equivalent (i.e. absence of difference in their respective behaviors) if they return the same values for the output variables given the same values for the input variables, here defined by the valuation

$$\iota : \mathbb{N} \to \mathcal{I} \to \mathcal{D}_\perp.$$

Let $\mathbb{B}$ be the type of truth values (Boolean values). Let $\sigma^f$ and $\sigma^g$ be the valuations associated to the dataflow programs $f$ and $g$ with inputs valuation $\iota$. The absence of behavior difference between the two dataflow programs is characterized by the following properties:

$$\forall i \in \mathbb{N}, \forall o \in \mathcal{O}^f, \forall o' \in \mathcal{O}^g, \rho(o) = o' \Rightarrow \sigma_i^f(o) = \sigma_i^g(o') \qquad (1)$$

$$\exists \mathcal{R} \in \mathcal{L} \to (\mathcal{L} \to \mathcal{D}_\perp) \to (\mathcal{L} \to \mathcal{D}_\perp) \to \mathbb{B} \ s.t. \ \forall i \in \mathbb{N}, \left(\mu_i^f \mathcal{R} \mu_i^g\right) \Rightarrow \left(\mu_{i+1}^f \mathcal{R} \mu_{i+1}^g\right) (2)$$

Hence, $\mathcal{R}$, denoted herein "induction relation", links the values of the internal variables of $f$ with the values of the internal variables of $g$, and holds for the subsequent execution step ($i + 1$) provided it holds for the current execution step i. This induction relation $\mathcal{R}$ is not proved in the present disclosure and is received as an input of the proving method 20, during a step S21.

As illustrated by figure 2, the proving method 20 comprises a step S22 of setting an initial sequent based on the first mathematical representation and the second mathematical representation of respectively the dataflow programs $f$ and $g$. Said initial sequent, further detailed hereinbelow, basically defines that the values of the output variables of the dataflow programs $f$ and $g$ are identical.

Then, the proving method 20 comprises an iterated step S23 of applying a predetermined set of deduction rules to the initial sequent, wherein each deduction rule converts a sequent into at least one other sequent, until irreducible sequents are obtained. The deduction rules are further detailed hereinbelow.

As illustrated by figure 2, the proving method 20 comprises a step S24 applying a decision procedure to each irreducible sequent obtained by iteratively applying the deduction rules. In preferred embodiments, each decision procedure is an automatic theorem prover, for instance a SMT solver.

If all irreducible sequents are considered satisfiable, then the absence of behavior difference is proved between the first and second dataflow programs *f* and *g*. If one of the dataflow programs is an upgrade of the other one, then this means that the upgrade has not introduced any semantical change.

In turn, if one of the irreducible sequents is not satisfiable, then the absence of behavior difference is not proved and the first and second dataflow programs *f* and *g* may exhibit semantic differences.

In preferred embodiments, when an irreducible sequent cannot be proved to be satisfiable by a decision procedure, said decision procedure returns a witness state of the non-satisfiability of said irreducible sequent, said witness state including values of the input variables and values of the internal variables of the first and second dataflow programs *f* and *g*, which satisfy the induction relation $\mathcal{R}$ , for which the values of the output variables are not identical for the first and second dataflow programs. Such a witness state may be useful for the developer to understand the reasons of the semantic difference between the first and second dataflow programs *f* and *g*.

We now provide details on the sequents calculation carried out by the proving method 20, and on the set of deduction rules used.

In order to define the deduction rules for the analysis of the behavior difference, let us first identify the syntax of formulae used in these deduction rules. Formulae are first-order logic predicates valued on expressions of our abstract syntax (see Definition 1) and any relations between these expressions.

Definition 5 (Formula):

A formula *F* is defined as follows:

$$F := e \mid \neg F \mid F \wedge F \mid F \vee F \mid F \Rightarrow F \mid \forall x \in \mathcal{D}.F \mid \exists x \in \mathcal{D}.F \qquad (3)$$

wherein e is an expression as defined in Definition 1.

For instance, $x > 3 \wedge x = y + z \Rightarrow \forall t.t + x > 42$ is a well-formed formula in our formalism.

In our deduction system, sequents have the structure $\Gamma \vdash_\square \bigwedge_{j=0}^{n} e_j = e'_j$ where $\Gamma$ is a set of well-formed formula (used as hypothesis), *e* and *e'* are expressions as defined in Definition 1. It means that, for all $0 \leq j < n$, $e_j$ is equal to $e'_j$ holds when the $\Gamma$ formula is satisfied. As our system targets dataflow programs including memory blocks, inductive reasoning is mandatory and some sequents might be valid only for the initialization phase or execution phase of the induction. Therefore, we distinguish three situations: $\vdash_*$ means that the sequent is valid when no induction has been performed yet (by applying an induction deduction rule detailed hereinbelow), $\vdash_{init}$ means that the sequent is valid for the initialization phase of the induction and $\vdash_{step}$ means that the sequent is valid for the execution phase of the induction (i.e. the execution steps after the initialization phase). When the sequent is valid for any situation, we use the $\vdash_\square$ notation.

Deduction rules for change impact analysis have the following shape:

$$\frac{\pi_1 \quad \cdots \quad \pi_m}{\Gamma \vdash_\square \bigwedge_{j=0}^{n} e_j = e'_j}$$

wherein $\pi_i$ are proof derivations and $\square \in \{*, init, step\}$.

For the sake of genericity, we use the context notion in deduction rules. A context is an expression surrounding some target expression. It is useful to isolate a subexpression in some expression on which we focus our reasoning. For instance, focusing on the subexpression *x + y* of $0 \rightarrow pre(x + y)$ is done by abstracting the surrounding expression as a context *E*.

Definition 6 (Context):

A context *E*[] is an expression containing one hole, noted [], exactly.

$$E[] := [] \mid \circ E[] \mid \text{pre } E[] \mid E[] \Diamond e \mid e \Diamond E[] \mid E[] \rightarrow e \mid e \rightarrow E[] \mid$$

$$\text{if } E[] \text{ then } e \text{ else } e \mid \text{if } e \text{ then } E[] \text{ else } e \mid \text{if } e \text{ then } e \text{ else } E[] \qquad (4)$$

wherein $e$, $\Diamond$ and $\circ$ are respectively an expression, a binary operator and a unary operator as defined in the abstract syntax.

The deduction rules for behavior difference analysis are provided in figure 6. Note that the labels of some deduction rules shown in figure 6 are terminated by "L" (for instance Pre-Binary-L, FBY-Init-L, etc.) meaning that they correspond to left-wise versions of the deduction rule. Right-wise versions of the rules also exist. For instance, the FBY-Init-R and FBY-Step-R deduction rules are defined as:

$$(\text{FBY} - \text{Init} - \text{R}) \quad \frac{\Gamma \vdash_{init} e = E[e_1]}{\Gamma \vdash_{init} e = E[e_1 \rightarrow e_2]}$$

$$(\text{FBY} - \text{Step} - \text{R}) \quad \frac{\Gamma \vdash_{step} e = E[e_2]}{\Gamma \vdash_{step} e = E[e_1 \rightarrow e_2]}$$

As illustrated by figure 6, the deduction rules comprise an induction deduction rule, denoted by (Induction) in figure 6, which converts a sequent into a first sequent relative to the initialization phase of the first and second dataflow programs, referred to as initialization root sequent, and a sequent relative to the execution phase of the first and second dataflow programs after initialization, referred to as execution root sequent. The execution root sequent includes as hypothesis the induction relation $\mathcal{R}$ and the fact that the values of the set of output variables of the first and second dataflow programs $f$ and $g$ are identical at the previous execution step. The induction relation $\mathcal{R}$ is used to describe a state synchronization relation between the states of both dataflow programs $f$ and $g$. It is necessary when programs have internal states (variables), otherwise the proof cannot be achieved. The idea of the synchronization is to describe how both systems can evolve in parallel such that we may be able to conclude that their respective output variable values match perfectly.

The execution root sequent is the root of the branches of the execution phase of the induction and corresponds in figure 6 to the sequent

$$\Gamma, \mathcal{R}, \bigwedge_{o \in \mathcal{O}f} \text{pre } o = \text{pre } \rho(o) \vdash_{step} \bigwedge_{j=0}^{n} e_j = e'_j.$$

From this execution root sequent (i.e. in any branch composed of sequents deduced directly or indirectly from the execution root sequent), only sequents with $\vdash_{step}$ can be used.

The initialization root sequent is the root of the branches of the initialization phase of induction and corresponds on figure 6 to the sequent $\Gamma \vdash_{init} \bigwedge_{j=0}^{n} e_j = e'_j$. From this initialization root sequent (i.e. in any branch composed of sequents deduced directly or indirectly from the initialization root sequent), only sequents with $\vdash_{init}$ can be used.

As illustrated by figure 6, the deduction rules comprise an initialization-specific deduction rule, denoted by (FBY-Init-L) (and its right-wise version) which is applicable only on the initialization root sequent or on a sequent deduced directly or indirectly from the initialization root sequent. Also, the deduction rules comprise an execution-specific deduction rule, denoted by (FBY-Step-L) (and its right-wise version) which is applicable only on the execution root sequent or on a sequent deduced directly or indirectly from the execution root sequent.

Considering the first and second dataflow programs $f$ and $g$, the absence of behavior difference between them is stated by the initial sequent $\emptyset \vdash_{\Box} \bigwedge_{j=0}^{n} o_j = o'_j$ where $o_j \in \mathcal{O}^f$ and

$$o'_j \in \mathcal{O}^g$$

are all the output variable values of *f* and *g* respectively. In other words, said initial sequent defines that the values of the set of output variables of *f* and *g* are identical.

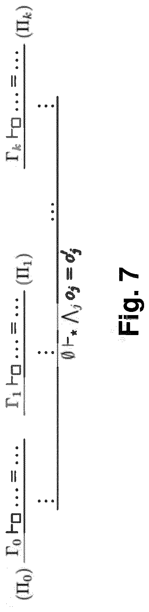

Then applying during step S23 the deduction rules in figure 6 (and their right-wise versions) produces a proof tree (the general structure of which is illustrated by figure 7) terminated by irreducible sequents $\Pi_k$, i.e., sequents on which the deduction rules cannot apply. In that case, the goal is free of any dataflow primitives, which means that the irreducible sequents are integer arithmetic statements. The proof is complete if and only if each irreducible sequent $\Pi_k$ is satisfiable. The satisfiability proof is left to some automatic decision procedures such as theorem provers, during step S24. For instance, SMT solvers are very suitable to check integer arithmetic statements.

Let us apply the proving method 20 to check the absence of behavior difference between the dataflow program *f* in part a) of figure 1 and the dataflow program *g* in part b) of figure 1. Using the generic syntax (figure 3) of our dataflow textual programming language, the example dataflow programs are as follows:

```
Node f(r: Bool) returns (b: Bool) {
    n: Int
    n = If r Then 0 Else (0 -> pre n + 1);
    b = n % 2 = 1; }
Node g(r: Bool) returns (b': Bool) {
    b' = If r Then 0 Else (0 -> pre (not b')); }
```

In this example, the dataflow program *g* may be an update (optimization) of the dataflow program *f*. They are supposed to output the same values, i.e. a clock signal (alternation of the values 1 and 0). The clock can be reinitialized thanks to the input parameter *r*.

Then, we parse (step S20) these dataflow programs (source code) to produce their respective mathematical representations using the abstract syntax:

$$f = \langle \{r\}, \{b\}, \{n\}, n = \text{if } r \text{ then } 0 \text{ else } (0 \to \text{pre } n + 1) :: b = (n \bmod 2 = 1) :: \varepsilon \rangle$$

$$g = \langle \{r\}, \{b'\}, \{b'\}, b' = \text{if } r \text{ then } 0 \text{ else } \left(0 \to \text{pre}(\neg b')\right) :: \varepsilon \rangle$$

More specifically, the mathematical representation for the dataflow program *f* corresponds to:

$$n = \text{if } r \text{ then } 0 \text{ else } (0 \to \text{pre } n + 1) :: b = (n \bmod 2 = 1) :: \varepsilon$$

and the mathematical representation for the dataflow program *g* corresponds to:

$$b' = \text{if } r \text{ then } 0 \text{ else } \left(0 \to \text{pre}(\neg b')\right) :: \varepsilon$$

Note that the sets of output variables of *f* and *g* are in bijection, the bijective application being $\rho$ such that $p(b) = b'$. Also, in this example, the set of internal variables and the set of output variables are the same for the dataflow program *g*, and consist in the variable *b'*.

Table 2 provides execution traces for the dataflow programs *f* and *g*. The function $\iota$ gives the sequence of input values for *r*.

Table 2

| Time | to | $t_1$ | $t_2$ | t3 | t4 | $t_5$ | t6 | $t_7$ | ⋯ |
|------|-----|-----|-----|-----|-----|-----|-----|-----|-----|
| *r (I)* | 0 | 0 | 0 | 0 | 0 | 1 | 0 | 0 | ⋯ |
| *n (f)* | 0 | 1 | 2 | 3 | 4 | 0 | 1 | 2 | ⋯ |
| *b (f)* | 0 | 1 | 0 | 1 | 0 | 0 | 1 | 0 | ⋯ |
| *b' (g)* | 0 | 1 | 0 | 1 | 0 | 0 | 1 | 0 | ⋯ |

We can see that execution traces seem very similar.

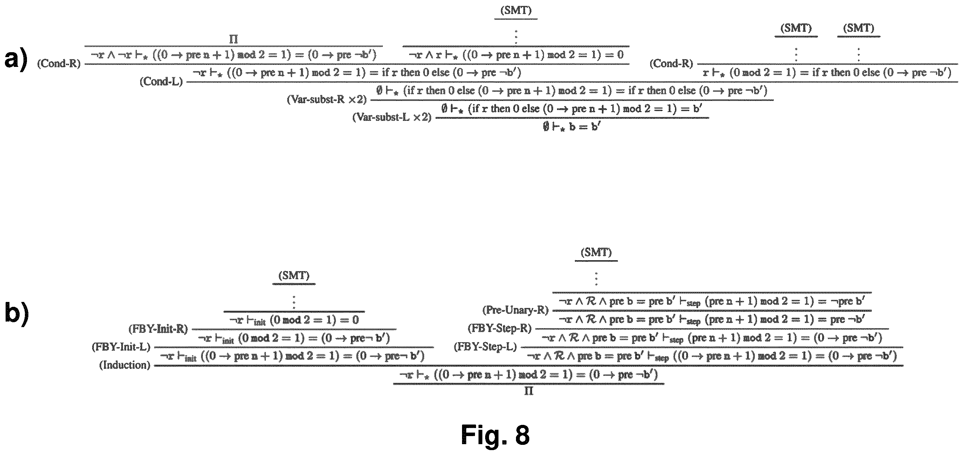

In order to prove the absence of semantic change between the two dataflow programs, we iteratively apply (step S23) the deduction rules illustrated in figure 6 (and their right-wise versions). The resulting proof tree is represented in figure 8, wherein the proof tree in part b) of figure 8 corresponds to the branch Π in part a) of figure 8.

In the non-limitative example illustrated by figure 8, the irreducible sequents are processed by SMT solvers (step S24). Note that an induction deduction rule appears in the reasoning to handle memory blocks, relying on the induction relation $\mathcal{R}$ received at step S21. For the considered dataflow programs $f$ and $g$, the induction relation is as follows:

$$\mathcal{R} = \big((\text{pre } n + 1 \bmod 2 = 0) = \text{pre } b'\big)$$

It is emphasized that the present disclosure is not limited to the above exemplary embodiments. Variants of the above exemplary embodiments are also within the scope of the present disclosure.

## REFERENCES

[LAHIRI2012] Lahiri, S. K., Hawblitzel, C., Kawaguchi, M., Rebêlo, H.: "Symdiff: A language-agnostic semantic diff tool for imperative programs", In International Conference on Computer Aided Verification, pages 712-717, Springer, 2012.

## Claims

1. A computer implemented method (20) for proving an absence of difference in the respective behaviors of a first dataflow program and a second dataflow program, the first dataflow program and the second dataflow program having a same set of input variables, a same set of output variables and respective sets of internal variables, the first dataflow program and the second dataflow program having an initialization phase and an execution phase relative to execution steps after the initialization phase, wherein the internal variables correspond to variables for which the values are memorized from one execution step to another, said method comprising:

   - (S20) parsing the first dataflow program and the second dataflow program to produce respectively a first mathematical representation and a second mathematical representation,
   - (S21) receiving an induction relation linking the values of the set of internal variables of the first dataflow program with the values of the set of internal variables of the second dataflow program,
   - (S22) setting an initial sequent based on the first mathematical representation and the second mathematical representation, said initial sequent defining that the values of the set of output variables of the first and second dataflow program are identical,
   - iteratively (S23) applying a predetermined set of deduction rules to the initial sequent until irreducible sequents are obtained, each deduction rule converting a sequent into at least one other sequent, wherein the set of deduction rules comprises an induction deduction rule which is applied and converts a sequent into a first sequent relative to the initialization phase, referred to as initialization root sequent, and a sequent relative to the execution phase, referred to as execution root sequent, which includes as hypothesis the induction relation and the fact that the values of the set of output variables of the first and second dataflow program are identical at the previous execution step,
   - (S24) applying a decision procedure to each irreducible sequent.

2. Method (20) according to claim 1, wherein the set of deduction rules comprises at least one initialization-specific deduction rule, which is applicable only on the initialization root sequent or on a sequent deduced from the initialization root sequent, and at least one execution-specific deduction rule, which is applicable only on the execution root sequent or on a sequent deduced from the execution root sequent.

3. Method (20) according to any one of the preceding claims, wherein the first dataflow program and the second dataflow program are in a textual programming language.

4. Method (20) according to any one of the claims 1 to 2, wherein the first dataflow program and the second dataflow program are in a visual programming language and are converted into a textual programming language before parsing.

5. Method (20) according to any one of the preceding claims, wherein the absence of difference in the behaviors of the first and second dataflow programs is proved when each irreducible sequent is proved to be satisfiable by a decision procedure.

6. Method (20) according to claim 5, wherein, when an irreducible sequent cannot be proved to be satisfiable by a decision procedure, said decision procedure returns a witness state of the non-satisfiability of said irreducible sequent, said witness state including values of the set of input variables and values of the respective sets of internal variables of the first and second dataflow programs, which satisfy the induction relation, for which the values of the set of output variables are not identical for the first and second dataflow program.

7. Method (20) according to any one of the preceding claims, wherein each decision procedure is an automatic theorem prover, for instance a satisfiability modulo theories, SMT, solver.

8. Computer program product comprising instructions which, when executed by at least one processor, configure said at least one processor to carry out a method (20) according to any one of claims 1 to 7.

9. Computer-readable storage medium comprising instructions which, when executed by at least one processor, configure said at least one processor to carry out a method (20) according to any one of claims 1 to 7.

10. System for proving an absence of difference in the respective behaviors of a first dataflow program and a second dataflow program, the first dataflow program and the second dataflow program having a same set of input variables, a same set of output variables and respective sets of internal variables, the first dataflow program and the second dataflow program having an initialization phase and an execution phase relative to execution steps after the initialization phase, wherein the internal variables correspond to variables for which the values are memorized from one execution step to another, said system comprising at least one processor and at least one memory, wherein the at least one processor is configured to carry out a method (20) according to any one of claims 1 to 7.

**a)**

**b)**

**Fig. 1**

**Fig. 2**

```
Program :=  Node Ident '(' Inputs ')' returns '(' Outputs ')' '{' VarDecls Equations '}'
Inputs, Outputs, VarDecls := Ident ':'  Type
Type := Bool, Int, Real
Equations := Ident '=' Expression ';' Equations
Expression :=
    Expression Binop Expression
    Unop Expression
    If Expression Then Expression Else Expression
    pre Expression
    Expression -> Expression
    Variable
    '(' Expression ')'
    Constant
Binop := +, -, /, *, mod, >=, <=, >, <, =, and, or
Unop := not, -
```

# Fig. 3

$$\llbracket c \rrbracket_i(\iota, \sigma) = c \qquad \text{[CONST]}$$

$$\llbracket v \rrbracket_i(\iota, \sigma) = (\iota_i \cup \sigma_i)(v) \qquad \text{[VAR]}$$

$$\llbracket l \diamond r \rrbracket_i(\iota, \sigma) = \llbracket l \rrbracket_i(\iota, \sigma) \diamond \llbracket r \rrbracket_i(\iota, \sigma) \qquad \text{[BINOP]}$$

$$\llbracket \circ\, e \rrbracket_i(\iota, \sigma) = \circ \llbracket e \rrbracket_i(\iota, \sigma) \qquad \text{[UNOP]}$$

$$\llbracket \text{if } g \text{ then } e_1 \text{ else } e_2 \rrbracket_i(\iota, \sigma) = \text{if } \llbracket g \rrbracket_i(\iota, \sigma) \text{ then } \llbracket e_1 \rrbracket_i(\iota, \sigma) \text{ else } \llbracket e_2 \rrbracket_i(\iota, \sigma) \qquad \text{[COND]}$$

$$\llbracket e_1 \rightarrow e_2 \rrbracket_0(\iota, \sigma) = \llbracket e_1 \rrbracket_0(\iota, \sigma) \qquad \text{[FBYL]}$$

$$\llbracket e_1 \rightarrow e_2 \rrbracket_{i+1}(\iota, \sigma) = \llbracket e_2 \rrbracket_{i+1}(\iota, \sigma) \qquad \text{[FBYR]}$$

$$\llbracket \text{pre}(e) \rrbracket_{i+1}(\iota, \sigma) = \llbracket e \rrbracket_i(\iota, \sigma) \qquad \text{[PRE]}$$

# Fig. 4

$$\llbracket \varepsilon \rrbracket_i(\iota, \sigma) = \sigma \qquad \text{[NIL]}$$

$$\llbracket x = e :: \mathcal{E} \rrbracket_i(\iota, \sigma) = \text{let } \sigma'_i = \sigma \cup \{x \mapsto \llbracket e \rrbracket_i(\iota, \sigma)\} \wedge \forall j < i, \sigma'_j = \sigma_j \text{ in } \llbracket \mathcal{E} \rrbracket_i(\iota, \sigma') \quad \text{[REC]}$$

# Fig. 5

$$(\text{Var-subst-L}) \quad \frac{\Gamma \vdash_\square E[e] = e'}{\Gamma \vdash_\square E[x] = e'} \qquad \begin{cases} E[] \text{ built from Grammar (4) without the derivation } E := \text{pre } E[] \\ (x = e) \in \mathcal{E}^f \\ \forall\, y \in \text{Vars}(e), y \prec x \end{cases}$$

$$(\text{Cond-L}) \quad \frac{\Gamma, g \vdash_\square E[e_1] = e \qquad \Gamma, \neg g \vdash_\square E[e_2] = e}{\Gamma \vdash_\square E[\text{if } g \text{ then } e_1 \text{ else } e_2] = e}$$

$$(\text{Binary-unfold}) \quad \frac{\Gamma \vdash_\square e_1 = e'_1 \qquad \Gamma \vdash_\square e_2 = e'_2}{\Gamma \vdash_\square e_1 \diamond e_2 = e'_1 \diamond e'_2} \qquad \frac{\Gamma \vdash_\square e = e'}{\Gamma \vdash_\square \circ e = \circ e'} \quad (\text{Unary-unfold})$$

$$(\text{Pre-Const-L}) \quad \frac{\Gamma \vdash_\square E[c] = e'}{\Gamma \vdash_\square E[\text{pre}(c)] = e'}$$

$$\frac{\Gamma \vdash_\square E[\text{pre}(\text{if } g \text{ then } e_1 \text{ else } e_2)] = e'}{\Gamma \vdash_\square E[\text{if } \text{pre}(g) \text{ then } \text{pre}(e_1) \text{ else } \text{pre}(e_2)] = e'} \, (\text{Pre-Cond-L})$$

$$(\text{Pre-Binary-L}) \quad \frac{\Gamma \vdash_\square E[\text{pre}(e_1) \diamond \text{pre}(e_2)] = e'}{\Gamma \vdash_\square E[\text{pre}(e_1 \diamond e_2)] = e'} \qquad \frac{\Gamma \vdash_\square E[\circ \text{pre}(e)] = e'}{\Gamma \vdash_\square E[\text{pre}(\circ e)] = e'} \quad (\text{Pre-Unary-L})$$

$$(\text{FBY-Init-L}) \quad \frac{\Gamma \vdash_{\text{init}} E[e_1] = e'}{\Gamma \vdash_{\text{init}} E[e_1 \to e_2] = e'} \qquad \frac{\Gamma \vdash_{\text{step}} E[e_2] = e'}{\Gamma \vdash_{\text{step}} E[e_1 \to e_2] = e'} \quad (\text{FBY-Step-L})$$

$$(\text{Split}) \quad \frac{\Gamma \vdash_\square \bigwedge_{j=0}^{m-1} e_j = e'_j \qquad \Gamma \vdash_\square \bigwedge_{j=m}^{n} e_k = e'_k}{\Gamma \vdash_\square \bigwedge_{j=0}^{n} e_j = e'_j} \quad 0 < m \leq n$$

$$(\text{Induction}) \quad \frac{\Gamma \vdash_{\text{init}} \bigwedge_{j=0}^{n} e_j = e'_j \qquad \Gamma, \mathcal{R}, \bigwedge_{o \in \mathcal{O}^f} \text{pre } o = \text{pre } \rho(o) \vdash_{\text{step}} \bigwedge_{j=0}^{n} e_j = e'_j}{\Gamma \vdash_* \bigwedge_{j=0}^{n} e_j = e'_j} \quad \rho : \mathcal{O}^f \rightarrowtail \mathcal{O}^g$$

# Fig. 6

$$(\Pi_0)\ \dfrac{\Gamma_0 \vdash_\Box \ldots = \ldots}{\vdots} \qquad \dfrac{\Gamma_1 \vdash_\Box \ldots = \ldots}{\vdots}\ (\Pi_1) \qquad \ldots \qquad \dfrac{\Gamma_k \vdash_\Box \ldots = \ldots}{\vdots}\ (\Pi_k)$$
$$\overline{\emptyset \vdash_\star \bigwedge_j o_j = o'_j}$$

**Fig. 7**

EP 4 276 612 A1

**a)**

$$(Cond-R) \cfrac{\cfrac{\Pi}{\neg r \wedge \neg r \vdash_* ((0 \to pre\ n + 1)\ mod\ 2 = 1) = (0 \to pre\ \neg b')} \quad \cfrac{(SMT)}{\vdots}{\neg r \wedge r \vdash_* ((0 \to pre\ n + 1)\ mod\ 2 = 1) = 0}}{\vdots}$$

(Cond-L) $\cfrac{}{\neg r \vdash_* ((0 \to pre\ n + 1)\ mod\ 2 = 1) = if\ r\ then\ 0\ else\ (0 \to pre\ \neg b')}$

(Cond-R) $\cfrac{\cfrac{(SMT) \quad (SMT)}{\vdots \quad \vdots}}{r \vdash_* (0\ mod\ 2 = 1) = if\ r\ then\ 0\ else\ (0 \to pre\ \neg b')}$

(Var-subst-R ×2) $\cfrac{}{\emptyset \vdash_* (if\ r\ then\ 0\ else\ (0 \to pre\ n + 1)\ mod\ 2 = 1) = if\ r\ then\ 0\ else\ (0 \to pre\ \neg b')}$

(Var-subst-L ×2) $\cfrac{}{\emptyset \vdash_* (if\ r\ then\ 0\ else\ (0 \to pre\ n + 1)\ mod\ 2 = 1) = b'}$

$$\emptyset \vdash_* b = b'$$

**b)**

(FBY-Init-R) $\cfrac{\cfrac{(SMT)}{\vdots}}{\neg r \vdash_{init} (0\ mod\ 2 = 1) = 0}$

(FBY-Init-L) $\cfrac{}{\neg r \vdash_{init} (0\ mod\ 2 = 1) = (0 \to pre\neg\ b')}$

$\cfrac{}{\neg r \vdash_{init} ((0 \to pre\ n + 1)\ mod\ 2 = 1) = (0 \to pre\neg\ b')}$

(Pre-Unary-R) $\cfrac{\cfrac{(SMT)}{\vdots}}{\neg r \wedge \mathcal{R} \wedge pre\ b = pre\ b' \vdash_{step} (pre\ n + 1)\ mod\ 2 = 1) = \neg pre\ b'}$

(FBY-Step-R) $\cfrac{}{\neg r \wedge \mathcal{R} \wedge pre\ b = pre\ b' \vdash_{step} (pre\ n + 1)\ mod\ 2 = 1) = pre\ \neg b'}$

(FBY-Step-L) $\cfrac{}{\neg r \wedge \mathcal{R} \wedge pre\ b = pre\ b' \vdash_{step} (pre\ n + 1)\ mod\ 2 = 1) = (0 \to pre\ \neg b')}$

$\cfrac{}{\neg r \wedge \mathcal{R} \wedge pre\ b = pre\ b' \vdash_{step} ((0 \to pre\ n + 1)\ mod\ 2 = 1) = (0 \to pre\ \neg b')}$

(Induction) $\cfrac{}{\neg r \vdash_* ((0 \to pre\ n + 1)\ mod\ 2 = 1) = (0 \to pre\ \neg b')}$

$$\Pi$$

**Fig. 8**

Europäisches
Patentamt

European
Patent Office

Office européen
des brevets

# EUROPEAN SEARCH REPORT

Application Number

EP 22 30 5721

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUCANU DOREL ET AL: "Program equivalence by circular reasoning", FORMAL ASPECTS OF COMPUTING, SPRINGER INTERNATIONAL, LONDON, GB, vol. 27, no. 4, 1 January 1990 (1990-01-01), pages 701-726, XP058667777, ISSN: 0934-5043, DOI: 10.1007/S00165-014-0319-6 * 1. Introduction; page 701 * * Examples 1.1, 1.2; page 702 * * 1.1 Contribution; page 703 * * 1.2 Related Work; page 703 * * 4. Unification; page 710 * * Example 4.1; page 710 * * Remark 7.2; page 714 * * Defintion 8.1; page 716 * * Lemmas 8.1-8.3; pages 716-717 * * Examples 8.1, 8.2; pages 720-723 * * 9 A protoype Unification; pages 723-724 * | 1-10 | INV. G06F9/44 ADD. G06F11/36 |

TECHNICAL FIELDS
SEARCHED       (IPC)

G06F

The present search report has been drawn up for all claims

| Place of search | Date of completion of the search | Examiner |
|---|---|---|
| Munich | 25 October 2022 | Roux-Decker, D |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Symdiff: A language-agnostic semantic diff tool for imperative programs. **LAHIRI, S. K. ; HAWBLITZEL, C. ; KAWAGUCHI, M. ; REBÊLO, H.** International Conference on Computer Aided Verification. Springer, 2012, 712-717